# FASCICULE DE BREVET EUROPEEN

(11) **EP 2 047 676 B1**
(45) Date de publication et mention de la délivrance du brevet: **06.07.2011**
(21) Numéro de dépôt: 07823317.8
(22) Date de dépôt: 20.07.2007
(51) Int. Cl.: H04N 5/44, H04N 5/765

(54) **ENTITE ELECTRONIQUE PORTABLE SECURISEE AMOVIBLE COMPORTANT DES MOYENS POUR AUTORISER UNE RETRANSMISSION DIFFEREE**
TRAGBARE, ABNEHMBARE UND SICHERE ELEKTRONISCHE EINHEIT MIT FUNKTION ZUR AUTORISIERUNG VERZÖGERTER NEUÜBERTRAGUNGEN
REMOVABLE SECURE PORTABLE ELECTRONIC ENTITY COMPRISING MEANS FOR AUTHORIZING DELAYED RETRANSMISSION

(30) Priorité: 31.07.2006 FR 0653212
(43) Date de publication de la demande: 15.04.2009
(73) Titulaire: OBERTHUR TECHNOLOGIES, 75017 Paris (FR)
(72) Inventeur: BERTIN, Marc, 78720 La Celle les Bordes (FR)
(74) Mandataire: Quantin, Bruno Marie Henri
(86) Numéro de dépôt international: PCT/FR2007/001256
(87) Numéro de publication internationale: WO 2008/015326

(56) Documents cités:
- EP-A- 1 633 133
- DE-U1-202006 001 690
- JP-A- 2004 193 944

## Description

La présente invention concerne une entité électronique portable sécurisée amovible comportant des moyens pour autoriser une retransmission différée. Elle s'applique, en particulier, aux supports d'information amovibles comportant des moyens de sécurisation comme, par exemple, des cartes à puces à microcontrôleur sécurisé par exemple conformes à la norme IS07816, des clefs USB (acronyme de « Universal Serial Bus » pour bus série universel), des cartes SD (acronyme de « Secure Digital » pour numérique sécurisée), ou une carte à microcircuit conforme à la spécification MMC.

L'invention concerne, également, un dispositif électronique de lecture d'une telle entité électronique, ou terminal hôte, comportant des moyens de retransmission différée du contenu de l'entité, et, éventuellement, des moyens de réception d'un contenu diffusé.

La présente invention trouve une application dans la réception d'un flux de données multimédia diffusé, notamment la réception de la télévision numérique terrestre ou de flux audiovisuels diffusés sur un réseau informatique, par exemple Internet ou téléphonique, et, en particulier, la réception de chaînes payantes, de morceaux musicaux ou de films, nécessitant soit un abonnement soit un paiement préalablement à la visualisation.

Un exemple d'entité électronique portable est une clé électronique ou « dongle » qui comprend généralement une interface lui permettant de se connecter à un terminal hôte, qui peut être une station de travail, un ordinateur, un téléphone mobile, un assistant personnel, une télévision numérique, un lecteur MP3, par exemple. Le plus souvent, l'interface de la clé électronique est conforme à la norme USB (acronyme de « Universal Serial Bus » pour bus série universel) qui décrit un système de bus série universel développé pour assurer une gestion simple et rapide des échanges de données entre un terminal hôte et un dispositif périphérique, par exemple une entité électronique portable, un clavier ou autre dispositif électronique. L'interface de l'entité électronique peut également être conforme à d'autres normes telles que la norme ISO 7816, la norme PCMCIA (acronyme de « Personal Computer Memory Card International Association » pour association internationale pour les cartes mémoire d'ordinateurs personnels) ou la norme MMC. L'entité électronique portable peut également comprendre une interface sans contact, notamment, une interface conforme à la norme WIFI ou Bluetooth (marques déposées) ou ISO 14443.

Le flux de données multimédia diffusé comporte, notamment, des données multimédia et/ou des données de programmes. Dans le cas de données multimédia, une application audio et / ou visuelle permettant l'affichage ou l'audition des données est requise. Dans le cas de données de programmes, il est fait appel à des moyens pour exécuter les données. Les données sont notamment sous forme numérique, par exemple au format MPEG ou de type DVB (acronyme de « Digital Video Broadcasting » pour diffusion vidéo numérique).

Il est connu du document EP 1 633 133, intitulé « Portable apparatus for enabling reproduction of télévision », une clef USB comportant des moyens de réception d'un flux de données diffusé, appelé aussi flux « broadcasted » en terminologie anglo-saxonne, et des moyens de connexion à un terminal hôte pour transmettre au terminal hôte des données issues du flux de données réceptionné. La clef USB, décrite dans ce document, peut également comporter des moyens de re-codage et de compression de données.

Toutefois, ce dispositif décrit ne permet pas de sécuriser la restitution des données reçues.

Ce dispositif ne confère pas, en effet, un degré de sécurité totalement satisfaisant dans la mesure où ni le terminal hôte, ni l'entité électronique ne sont en fait sécurisés. Il en résulte qu'une personne malveillante peut obtenir les données du flux et les utiliser sans avoir acquis les droits associés à ces données.

Il est nécessaire, en particulier en ce qui concerne les chaines payantes, en effet, que seuls les utilisateurs ayant acquis une autorisation, aussi appelée licence, soient en mesure de recevoir les données.

On connaît des récepteurs de télévision comportant des moyens de mémorisation, capable de restituer, à un instant donné, un programme enregistré précédemment, tout en enregistrant un programme diffusé au même instant. On appelle, dans la suite, cette fonctionnalité « la retransmission différée ». De tels récepteurs sont décrits notamment dans les demande/brevets US 5,241,428 et EP-789488.

On connaît également le document JP2004193944 qui décrit une retransmission différée appliquée à un téléphone mobile capable de recevoir et d'afficher un programme de télévision, le programme en cours de diffusion étant automatiquement enregistré pendant une conversation téléphonique afin que l'utilisateur puisse, ensuite, visualiser le programme enregistré.

Cependant, l'enregistrement d'une partie d'un contenu diffusé pour réaliser la fonction de retransmission différée pose des problèmes de sécurité. On veut, en effet, empêcher la copie illicite du contenu diffusé.

La présente invention vise à remédier à ces inconvénients. A cet effet, la présente invention vise une entité électronique portable sécurisée amovible comportant :
- des moyens de réception d'un contenu numérique diffusé,
- des moyens d'émission dudit contenu numérique diffusé reçu,
- des moyens sécurisés de retransmission différée du contenu numérique reçus adaptés à interdire une reproduction du contenu numérique reçus avant son émission et à provoquer l'émission, par les moyens d'émission, de manière différée dans le temps, du contenu numérique reçu,
- lesdits moyens étant aptes à fonctionner en parallèle ou quasi-parallèle.

Grâce à ces dispositions, le contenu numérique diffusé est réceptionné et peut être retransmis, notamment vers des moyens de traitement ou de visualisation en différé et de manière sécurisée.

Pour ce faire, les moyens de réception poursuivent la réception du contenu numérique diffusé alors que le contenu déjà reçu est en cours de retransmission à un moment ultérieur au moment de réception.

Ainsi, ces moyens sont amenés à fonctionner en parallèle, notamment, si l'entité électronique possède plusieurs processeurs, ou en quasi-parallèle, si l'entité électronique possède un seul processeur, afin d'être aptes à la fois à poursuivre la réception du contenu numérique diffusé et la retransmission.

L'entité électronique portable comprenant des moyens sécurisés, la restitution du contenu numérique diffusé reçu est réalisée de manière sécurisée, interdisant ainsi les copies illicites.

Selon une caractéristique particulière, l'entité électronique comporte des moyens de mémorisation dudit contenu numérique reçu.

Selon cette caractéristique, le contenu numérique reçu est mémorisé, permettant ainsi une relecture ultérieure pour une retransmission de contenu en différé.

Les moyens de mémorisation peuvent être de la mémoire volatile (RAM) ou de la mémoire non volatile, par exemple de la mémoire Flash.

Selon des caractéristiques particulières, les moyens sécurisés de retransmission différée comportent des moyens d'authentification d'un utilisateur.

Grâce à ces dispositions, l'accès au contenu à retransmettre ne peut être effectué que par un utilisateur légitime.

Selon des caractéristiques particulières, les moyens sécurisés de retransmission différée comportent des moyens pour limiter la vitesse d'émission dudit contenu par les moyens d'émission ou le nombre de retransmissions ou la fréquence de retransmission.

Grâce à ces dispositions, la reproduction par émission rapide du contenu en vue de son enregistrement sur au moins un support d'information est rendue lente et donc peu efficace. Préférentiellement, la vitesse d'émission est limitée à la vitesse de réception dudit contenu.

Selon des caractéristiques particulières, les moyens sécurisés de retransmission différée comportent des moyens de chiffrement adaptés à chiffrer le contenu numérique reçu et des moyens de déchiffrement du contenu numérique chiffré.

Selon des caractéristiques particulières, l'entité électronique telle que succinctement exposée ci-dessus comporte, en outre, des moyens de mémorisation d'informations de chiffrement et/ou de déchiffrement.

Selon des caractéristiques particulières, ladite entité électronique portable sécurisée amovible comporte des moyens de mémorisation d'au moins une partie d'une application de retransmission différée dans une zone mémoire de l'entité électronique portable sécurisée.

Grâce à ces dispositions, on interdit une modification de l'exécution de cette application, ce qui améliore la sécurisation du contenu retransmis. On se protège également contre les copies illicites de l'application.

Selon une caractéristique particulière, l'accès à ladite mémoire de l'entité électronique portable sécurisée est sécurisé par des moyens de sécurisation.

Selon des caractéristiques particulières, ladite application comporte des moyens pour former une interface homme/machine apte à commander ladite application.

Selon une caractéristique particulière, l'interface homme/machine est gérée par des moyens appartenant à une station hôte.

Selon des caractéristiques particulières, ladite entité électronique portable sécurisée amovible comporte des moyens pour exécuter ladite application, les moyens de sécurisation étant aptes à sécuriser l'exécution de ladite application.

On protège ainsi l'application elle-même et les moyens de l'exécuter, ce qui augmente la sécurité contre les modifications de l'exécution de cette application et les copies illicites de l'application.

Selon des caractéristiques particulières, l'application de retransmission différée met en oeuvre une zone de mémorisation réservée audit contenu, de taille prédéterminée.

Selon des caractéristiques particulières, l'application de retransmission différée comporte des moyens pour configurer la taille de ladite zone de mémorisation dudit contenu.

Selon des caractéristiques particulières, l'application de retransmission différée est adaptée, lorsque ladite mémoire de mémorisation dudit contenu de taille prédéterminée est pleine, à commander la retransmission du contenu à partir de début de la mémoire tampon.

Grâce à ces dispositions, lorsque la taille de la zone de mémorisation est limitée, le contenu est diffusé dans l'ordre de son enregistrement. L'utilisateur est alors certains de voir le contenu lorsque celui-ci ne peut plus être enregistré.

Selon des caractéristiques particulières, l'application de retransmission différée met en oeuvre un pointeur de lecture et un pointeur d'écriture dans une mémoire cyclique adaptée à conserver le contenu numérique reçu.

Selon des caractéristiques particulières, ladite application est adaptée à être exécutée en coopération avec une station hôte connectée à ladite entité électronique portable sécurisée amovible après chargement d'au moins une partie de l'application dans la mémoire de cette station hôte.

Selon des caractéristiques particulières, l'application de retransmission différée est à lancement automatique, après la connexion de l'entité électronique au terminal hôte.

Selon des caractéristiques particulières, les moyens de sécurisation sont aptes à sécuriser au moins en partie l'exécution de ladite application de retransmission différée ainsi chargée et exécutée dans le terminal hôte selon un mode de sécurisation prédéterminé.

Selon des caractéristiques particulières, les moyens de sécurisation sont aptes à former, à chaque chargement, au moins une partie de ladite application de retransmission différée.

Selon des caractéristiques particulières, la formation de ladite partie utilise une valeur imprévisible.

Selon des caractéristiques particulières, les moyens de sécurisation de l'application de retransmission différée sont, en outre, aptes à sécuriser toute modification apportée à ladite application de retransmission différée.

Selon des caractéristiques particulières, ladite application de retransmission différée met en oeuvre au moins une clé cryptographique temporaire.

Selon des caractéristiques particulières, l'application de retransmission différée comporte au moins un programme principal exécuté par un terminal hôte et au moins un programme auxiliaire stocké et exécuté dans ladite entité électronique connectée au terminal hôte, le programme principal générant des commandes d'exécution de tout ou partie dudit programme auxiliaire.

Selon des caractéristiques particulières, le programme auxiliaire est découpé en une pluralité de tronçons, à chaque tronçon étant associé un code d'authentification.

Selon des caractéristiques particulières, l'entité électronique telle que succinctement exposée ci-dessus comporte des moyens de vérification des codes d'authentification des tronçons, et des moyens de blocage de ladite entité en cas de vérification négative.

Selon des caractéristiques particulières, l'application de retransmission différée est apte à décoder le contenu numérique reçu.

Selon des caractéristiques particulières, l'entité électronique telle que succinctement exposée ci-dessus comporte des moyens de conversion du contenu numérique reçu, lesdits moyens de conversion comportant une interface de réception apte à être reliée à une antenne de réception.

Selon des caractéristiques particulières, l'entité électronique telle que succinctement exposée ci-dessus comporte des moyens de conversion du contenu numérique reçu, lesdits moyens de conversion comportant une interface de réception apte à être reliée à un réseau câblé.

Selon une caractéristique particulière, l'entité électronique comporte, sur sa surface extérieure, des moyens de commande aptes à commander la lecture, l'avance rapide, le retour rapide et l'enregistrement d'un contenu numérique diffusé reçu.

Les avantages, buts et caractéristiques particulières de ce dispositif et de ce système étant similaires à ceux de l'entité électronique portable sécurisée amovible, tels que succinctement exposés ci-dessus, ils ne sont pas rappelés ici.

D'autres avantages, buts et caractéristiques de la présente invention ressortiront de la description qui va suivre, faite, dans un but explicatif et nullement limitatif en regard des dessins annexés dans lesquels :
- la figure 1 représente, schématiquement, un premier mode de réalisation de l'entité et du lecteur objets de la présente invention,
- la figure 2 représente, schématiquement, un deuxième mode de réalisation de l'entité et du lecteur objets de la présente invention,
- la figure 3 représente, schématiquement, un troisième mode de réalisation de l'entité et du lecteur objets de la présente invention,
- la figure 4 représente, schématiquement, un quatrième mode de réalisation de l'entité et du lecteur objets de la présente invention,
- la figure 5 représente, schématiquement, un cinquième mode de réalisation de l'entité et du lecteur objets de la présente invention et
- la figure 6 représente, sous forme d'un logigramme, des étapes mises en oeuvre dans un mode de réalisation particulier du procédé objet de la présente invention.

Dans toute la description, on utilise indifféremment les termes de « contenu numérique diffusé », de « flux de données diffusé » ou de « flux multimédia diffusé ». Ces contenus ou flux diffusés constituent les données diffusées traitées par l'entité électronique portable sécurisée amovible, objet de la présente invention.

Dans toute la description, préférentiellement, les zones mémoires mises en oeuvre sont de taille configurable.

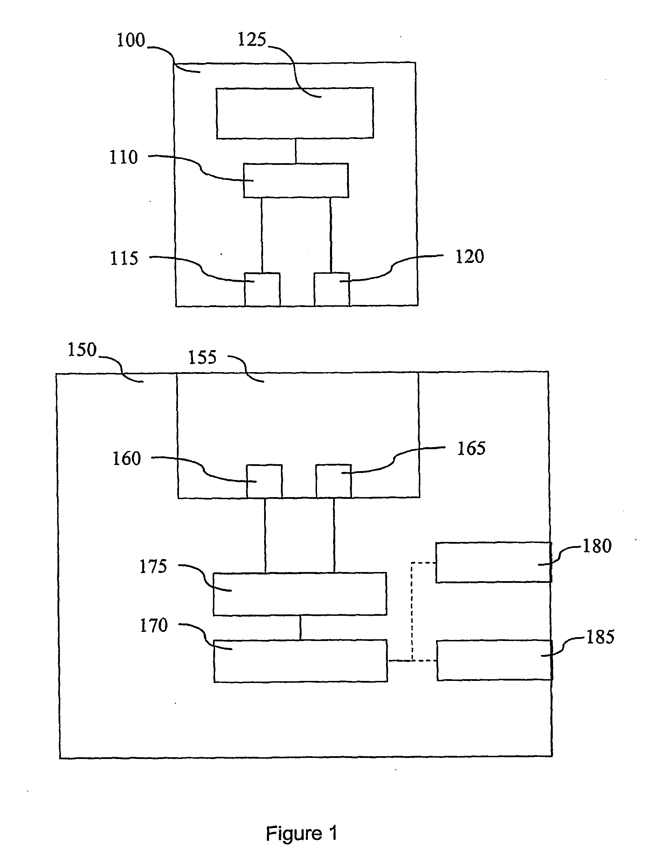

On observe, en figure 1, une entité électronique portable sécurisée amovible 100 et un dispositif électronique de lecture 150 de l'entité 100. L'entité 100 comporte un contrôleur de sécurisation 110, un port d'entrée de signaux d'horloge 115, un port d'entrée/sortie 120 et une mémoire 125. L'entité 100 est, par exemple, une carte de type MMC spécialement dédiée à la mise en oeuvre de la présente invention.

Le dispositif électronique de lecture 150, aussi appelé lecteur ou station hôte, comporte un support 155 de l'entité 100, un port de sortie d'horloge 160, un port d'entrée sortie 165, une mémoire de programme 170, un contrôleur 175, un moyen de réception de contenu numérique 180 et un moyen d'émission de contenu numérique 185 aussi appelé moyen de retransmission.

Un moyen de réception comprend notamment une antenne et un convertisseur analogique. Un moyen d'émission est notamment connecté à un écran et un haut-parleur, de façon à restituer à l'utilisateur le contenu numérique reçu.

Dans le mode de réalisation de la présente invention illustré en figure 1, les moyens sécurisés de retransmission différée aptes à sécuriser la retransmission comprennent le contrôleur de sécurisation 110 et la mémoire 125. Le contrôleur de sécurisation 110 peut être éventuellement relativement rudimentaire. Par exemple, il peut s'agir dans le cas d'une carte à mémoire flash sécurisée, d'un microcontrôleur de mémoire flash qui a la particularité de vérifier un mot de passe pour autoriser l'accès à la mémoire flash ou à une partie de cette mémoire flash.

Cependant, le contrôleur de sécurisation 110 est préférentiellement plus complexe. Dans ce cas, les moyens sécurisés de retransmission différée peuvent comporter des moyens cryptographiques et/ou des moyens de sécurisation du contrôleur 110, sécurisation effectuée, par exemple, par des contre-mesures contre les attaques par faute ou par mesure de courant.

Le contrôleur de sécurisation 110 est préférentiellement certifié selon les critères EAL (acronyme de « Evaluation Assurance Level » ou niveau d'assurance d'évaluation) ou FIPS (acronyme de « Federal Information Processing Standards » pour standards de traitement d'information fédéral).

Selon un mode de réalisation particulier, le contrôleur de sécurisation 110 est associé à ou comporte des moyens de limitation de la vitesse d'émission du contenu numérique. La vitesse d'émission peut notamment être déterminée par rapport au volume des données numériques à transmettre, au temps de restitution de ces données ou à une autre grandeur. De tels moyens de limitation utilisent des moyens de mesure du temps interne à l'entité électronique 100, notamment une horloge, ou sont de type condensateur tel que décrit dans le document FR 2837959, par exemple.

Par l'intermédiaire de ces moyens internes de mesure, les moyens de limitation sont aptes à décider d'interdire l'émission d'une partie du contenu de la mémoire 125, notamment lorsque, après réception d'une partie d'une commande, l'émission du contenu de la mémoire serait à effectuer à une vitesse supérieure à la vitesse maximale d'émission autorisée.

Le contrôleur de sécurisation 110 est adapté à effectuer une authentification de la station hôte 150 avant d'autoriser la retransmission différée du contenu numérique reçu. Par exemple, le contrôleur de sécurisation 110 est adapté à vérifier le code d'authentification fourni par la station hôte, selon des techniques connues en soi.

Le contrôleur de sécurisation 110 est adapté à mettre en mémoire 125, un contenu numérique chiffré. Dans des variantes, le contenu numérique diffusé étant chiffré, il est mis en mémoire sans déchiffrement. Dans d'autres variantes, le contenu numérique, éventuellement déjà chiffré, est déchiffré par le contrôleur de sécurisation 110 avant d'être mis en mémoire 125 et, lors de la retransmission différée du contenu numérique, le contrôleur de sécurisation 110 chiffre le contenu numérique mémorisé, par exemple au moyen d'une clé temporaire commune avec la station hôte.

Le contrôleur 175 et la mémoire de programme 170 sont adaptés à mettre en oeuvre un programme de retransmission différée conjointement à l'exécution d'un programme par le contrôleur de sécurisation 110.

Il est à noter que, conformément à l'invention, la réception de contenu numérique diffusé et la retransmission sont effectuées en parallèle ou en quasi-parallèle. De la sorte, lors de la retransmission du contenu déjà reçu, il est possible de poursuivre la réception du contenu en cours de diffusion.

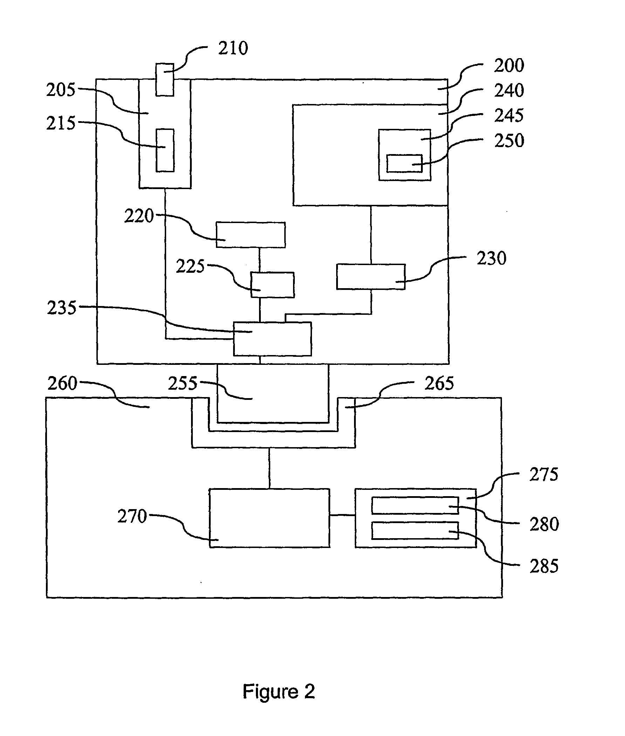

On observe, en figure 2, des éléments constitutifs d'une entité électronique amovible 200, formant ici un « dongle » décodeur ou une clé électronique USB. Dans le mode de réalisation illustré en figure 2, le contenu numérique diffusé, ou flux multimédia diffusé qui est reçu, est mis en mémoire dans une mémoire 275 d'un terminal hôte 260 et retransmis en mettant en oeuvre des moyens répartis entre l'entité 200 et le terminal hôte 260. L'entité électronique 200 comporte une interface 255 permettant de se connecter au port 265 du terminal hôte 260.

Selon un mode de réalisation, l'interface 255 et le port 265 sont conformes à la norme USB. En variante, les interfaces 255 et 265 sont de type PCMCIA ou MMC ou conforme à la norme ISO 7816.

Le terminal hôte 260 est susceptible de recevoir, lire et / ou traiter des données. A cet effet, il comporte, notamment, une unité centrale de traitement CPU (acronyme de « central processing unit ») 270 et une mémoire vive 275, préférentiellement non volatile, par exemple un disque dur, qui comporte la zone de mémoire tampon 280 et une zone de mémoire d'application logicielle.

L'enregistrement du contenu numérique diffusé dans la mémoire tampon 280 peut être permanent, déclenché par un événement tel qu'un changement de thème ou commandé en mettant en oeuvre l'interface homme-machine gérée par l'application information 285 téléchargée depuis l'entité 200 dans une mémoire volatile à partir de l'application 245. Le contenu numérique à enregistrer est chiffré par l'entité 200 et déchiffré par le terminal hôte 260 en mettant en oeuvre une application informatique 285 téléchargée depuis l'entité 200 dans une mémoire volatile.

Cette application 285 permet aussi la retransmission différée du contenu numérique stocké dans la mémoire 280.

L'entité électronique, ici une clé USB 200, a une forme générale composée de circuits montés typiquement sur un circuit imprimé. D'autres variantes d'architecture sont bien évidemment à la portée de l'homme du métier.

La clé USB 200, bien que de taille réduite (s'agissant en effet d'une entité électronique de poche, ou portable à la main selon la terminologie anglaise « hand-held »), permet en effet de regrouper les circuits décrits plus bas. Une telle clé USB 200 possède, par ailleurs, un connecteur (participant à l'interface mentionnée ci-dessus) formé dans le prolongement de son corps, c'est-à-dire principalement d'un capot recouvrant l'ensemble des circuits électroniques et délimitant le volume extérieur de la clé USB 200.

Un organe formant concentrateur 235, appelé encore « *hub* » en terminologie anglo-saxonne, permet de connecter, de manière connue, plusieurs périphériques conformes à la norme USB au port USB 255.

L'entité 200 comprend un lecteur de carte à puce 225 apte à communiquer selon le protocole USB et relié au concentrateur 235. Avantageusement, le lecteur de carte à puce 225 est un périphérique USB standard dont les contrôleurs sont intégrés au système d'exploitation du terminal hôte 260, ce qui confère l'avantage d'éviter l'installation préalable de tels contrôleurs lors de l'utilisation de la clé USB 200. Par exemple, le lecteur de carte à puce comprend un contrôleur de type USB CCID (acronyme de « Chip Card Interface Device », pour dispositif d'interface de carte à puce).

Une carte à puce 220 formant les moyens sécurisés de retransmission différée est logée dans le lecteur de carte à puce 225 ; la carte à puce 220 (parfois dénommée carte à microcircuit) est apte notamment à autoriser (c'est-à-dire, en quelque sorte, à décider et à commander) la retransmission des données et à sécuriser cette retransmission des données. La carte à puce 220 est, par exemple, une carte au format ID-000 conforme à la norme ISO-7816. Le lecteur 225 comprend un logement permettant de recevoir la carte 220. Un capot amovible (non représenté) permet, par exemple, d'insérer la carte 220 dans le logement approprié.

En variante, la carte à puce 220 est un circuit de type microcontrôleur sécurisé adapté à communiquer selon la norme USB, par exemple un circuit directement fixé et connecté au circuit de l'entité 200, sans lecteur. Un tel microcontrôleur sécurisé est, lui aussi, capable de décider et de sécuriser la retransmission des données.

L'entité 200 comprend, en outre, une mémoire 240. En pratique, la mémoire 240 comprend au moins une partie non volatile. Par exemple, la mémoire 240 est une mémoire de type Flash de 128 Mo.

La mémoire 240 est contrôlée par un contrôleur 230, lui-même relié au concentrateur 235.

En outre, l'entité électronique 200 comporte des moyens de réception 205 d'un flux de données diffusé, moyens 205 qui permettent la conversion d'un signal reçu en un flux de données multimédia sécurisé. Ces moyens de réception 205 comprennent une interface de réception, notamment un connecteur 210 apte à être relié à une antenne RF ou à une parabole de réception d'un flux émis par satellite, ou à un réseau par câble. L'interface de réception peut également être un récepteur de données sans fil, par exemple conforme à la norme WIFI ou Bluetooth.

En variante, l'entité électronique 200 inclut une antenne de réception (au lieu d'un connecteur à une telle antenne).

Les moyens de réception 205 comprennent également des moyens de conversion, par exemple un circuit de syntonisation (parfois dénommé « tuner ») et un circuit de démodulation, par exemple de démodulation QPSK, 215.

Les moyens de réception 205, reliés au concentrateur 235, sont ainsi aptes à recevoir un flux de données conformes par exemple au format MPEG ou le format DVB. A cette étape du traitement, les données sont toujours sécurisées, par exemple chiffrées au moyen d'une clé cryptographique.

La mémoire 240 mémorise une application de retransmission différée 245, comprenant, notamment, des moyens de déchiffrement des données du flux reçu, des moyens de décodage du flux diffusé, en particulier aptes à extraire du flux DVB les données au format MPEG, des moyens de décompression, par exemple un décodeur MPEG et des moyens de gestion d'une interface homme-machine 250. Cette interface homme-machine 250 prend, par exemple, la forme d'une fenêtre rectangulaire dans lequel on affiche, d'une part, le contenu numérique et, d'autre part, des boutons de commande, par exemple de lecture, pause, avance rapide, retour rapide et l'enregistrement dans une mémoire tampon 280 du flux diffusé reçu de l'entité électronique 200, décrite ci-dessous.

En pratique, le contrôleur 230 est capable d'émuler le fonctionnement d'un lecteur de CD ROM comportant un logiciel de gestion de l'application de retransmission différée 245 de type lancement automatique appelé encore « *autorun* ». En d'autres termes, le logiciel de gestion de l'application de retransmission différée est chargé et exécuté automatiquement par le terminal hôte lorsque l'entité 200 se connecte au terminal hôte 260.

Selon un mode de réalisation, l'application de retransmission différée 245 est mémorisée dans la mémoire 240 de façon sécurisée, par exemple en contrôlant l'accès à cette application au moyen d'un code d'identification. La sécurisation de l'accès de l'application 245 est réalisée par le contrôleur 230 en collaboration avec la carte à puce.

En variante, le logiciel de gestion de l'application de retransmission différée 245 est chargé dans une zone mémoire non volatile ROM du contrôleur 230.

Selon un mode de réalisation, on charge une nouvelle version de l'application de retransmission différée 245 ou un autre programme.

Cette mise à jour est, par exemple, gérée par un programme mémorisé dans la mémoire 240. Pour ce faire, le programme se connecte de façon sécurisée à une entité autorisée, par exemple à un serveur du réseau, en utilisant par exemple les moyens de sécurisation de la carte à puce 220, notamment, par authentification, chiffrement ou signature.

En effet, le terminal hôte sur lequel est connectée l'entité peut être connecté à un réseau de communication unidirectionnel ou bidirectionnel, par exemple au réseau Internet ou à un réseau de télécommunication mobile.

Cette communication sécurisée est notamment réalisée au moyen d'une clé de session.

En outre, une clef de session K₁ peut être utilisée dans les modes de réalisation suivants afin de réaliser la sécurisation de la communication entre l'entité électronique (clé USB 200) et le terminal hôte 260, c'est-à-dire ici l'application de retransmission différée.

Selon un mode de réalisation, le flux de données sécurisé (c'est-à-dire protégé, par exemple chiffré) est reçu par l'entité 200 et est déchiffré par celle-ci (c'est-à-dire par des moyens de déchiffrement installés au sein de celle-ci), par exemple au sein des moyens de réception 205, notamment en collaboration avec la carte puce 220. Le flux déchiffré est alors communiqué à l'application de retransmission différée 245 installée sur le terminal hôte 260 après avoir été chiffré par la clé de session K₁ dans l'entité 200, par exemple par des moyens de chiffrement au sein des moyens de réception 205, notamment en collaboration avec la carte à puce 220. Le terminal hôte 260 procède alors à un nouveau déchiffrement du flux grâce à la clé de session K₁.

Selon un autre mode de réalisation, le flux de données protégé (ou chiffré) est reçu par les moyens de réception 205 de l'entité 200. L'information contenue dans le flux de données est ensuite transmise à la carte à puce 220. Celle-ci détermine à partir des informations contenues dans le flux de données (ou reçues par ailleurs) une clé de chiffrement temporaire K₂. La carte à puce 220 communique ensuite la clé de chiffrement temporaire K₂ au moyens de réception 205 qui chiffrent alors la clé de chiffrement temporaire K₂ par la clé de session K₁ et transmet le flux de données reçu et la clé de chiffrement temporaire K₂ chiffrée à l'application de retransmission différée 245 installée sur le terminal hôte 260. Le terminal hôte 260, qui détient la clé de session K₁, a ainsi accès à la clé de chiffrement temporaire K₂ et peut alors procéder au déchiffrement du flux.

La clé de session est notamment déterminée à partir d'une clé interne et d'une donnée extraite du flux de données ou d'une donnée communiquée selon un autre moyen : elle est par exemple mémorisée dans la carte à puce 220 et transmise au terminal hôte 260 au sein de l'application de retransmission différée 245.

On observe que, dans une variante non représentée, c'est le terminal hôte 260 qui comporte des moyens de réception des contenus numériques diffusés, similaires aux moyens 205, 210 et 215 et non l'entité 200.

Dans un mode de réalisation particulier, l'application de retransmission différée 245 comprend deux parties : un programme principal exécuté par le terminal hôte 260 et au moins un programme auxiliaire stocké en mémoire 240 et exécuté par l'entité 200 lorsqu'elle est connectée au terminal hôte 260.

Dans ce contexte, le programme principal génère des commandes d'exécution de tout ou partie dudit programme auxiliaire notamment après vérification positive de l'authentification du porteur de l'entité.

Dans un mode de réalisation particulier, le partage en deux parties, de l'application de retransmission différée 245 peut être réalisé de manière aléatoire, une première partie, principale, exécutée par le terminal hôte 260, et une autre partie, auxiliaire, exécutée par l'entité 200. Par exemple, la ou les zones de découpage sont aléatoires. Ce partage aléatoire peut intervenir à chaque chargement de l'application de retransmission différée 245 sur le terminal hôte 260 intervenant, par exemple, automatiquement à la suite de chaque connexion de l'entité électronique portable 200 au terminal hôte 260.

Par exemple, l'application de retransmission différée 245 est susceptible d'être prédécoupée en plusieurs tronçons dans une zone mémoire de la mémoire 240 ou dans une zone mémoire ROM du contrôleur 230. A chaque tronçon, on associe en outre des instructions de communication permettant la communication entre le terminal 260 et l'entité 200. Cette association intervient par exemple dans le cas du partage, en plusieurs parties, de l'application de retransmission différée 245. On sélectionne ensuite aléatoirement des groupes de tronçons contigus et on exécute uniquement parmi les instructions de communication associées à chaque tronçon, les instructions de communication séparant deux groupes de tronçons ainsi sélectionnés. En pratique, chaque tronçon de !'application de retransmission différée 245 peut avoir une taille différente. Chaque tronçon est constitué de codes écrits en langage machine, assembleur, C, ou Java, etc.

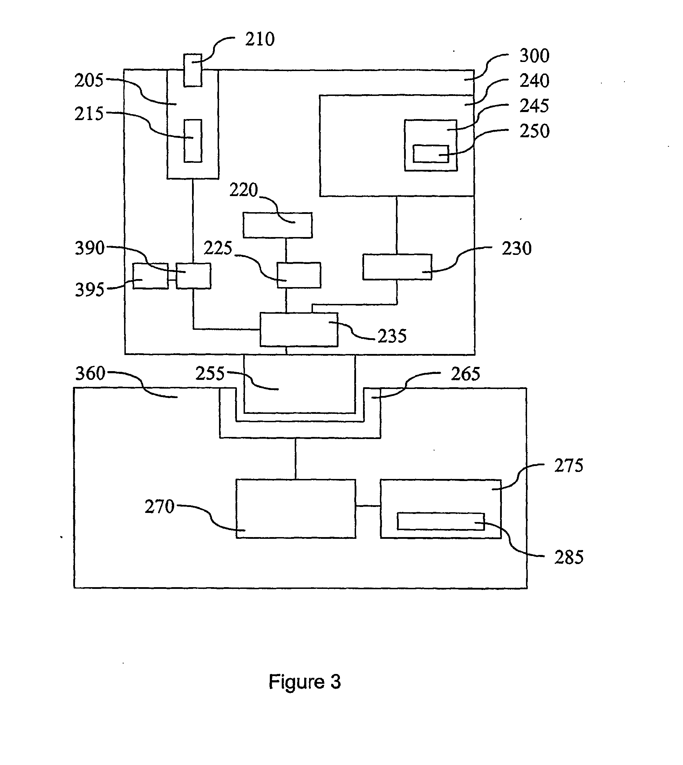

Dans le mode de réalisation illustré en figure 3, la mémorisation du contenu numérique à retransmettre de manière différée est effectuée dans une entité électronique portable sécurisée amovible 300 et ce contenu mémorisé est retransmis en mettant en oeuvre des moyens répartis entre l'entité 300 et un terminal hôte 360. On observe, en figure 3, que l'entité 300 est similaire à l'entité 200 et comporte tous les éléments de l'entité 200, auxquels s'ajoutent un contrôleur de mémoire 390 et une mémoire 395, préférentiellement non volatile. Le terminal hôte 360 est similaire au terminal 260 et comporte tous les éléments du terminal 260 à l'exception de la zone de mémoire 280.

Le contenu numérique diffusé reçu par l'entité 200 est chiffré et mis en mémoire dans la mémoire vive 395, par le contrôleur de mémoire 390, lorsqu'il doit être retransmis de manière différée. On observe que, lorsque la mémoire 395 est non volatile, le contenu numérique peut être retransmis sur un autre terminal hôte similaire au terminal hôte 260.

La mémoire 395 est préférentiellement gérée de manière cyclique.

Le contrôleur de mémoire 390 effectue la gestion de deux pointeurs, éventuellement sous la commande de l'interface homme-machine 250. Le pointeur d'écriture définit la position, dans la mémoire 395, où doit être écrit le contenu numérique diffusé qui va être reçu. Le pointeur de lecture définit la position, dans la mémoire 395, où doit être lu le contenu numérique à retransmettre en différé.

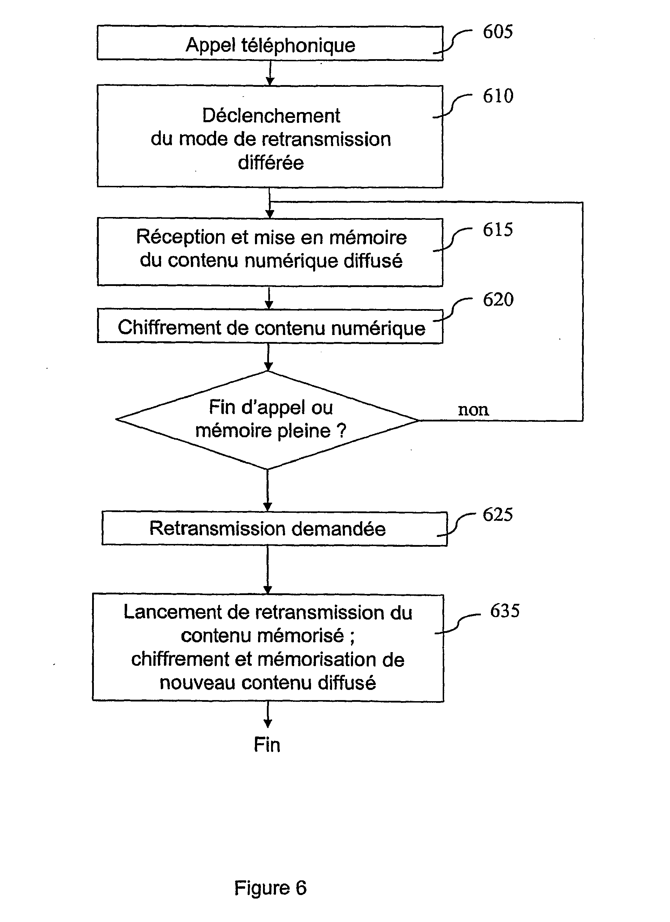

Comme exposé en regard de la figure 6, préférentiellement, si la mémoire 395 est pleine, c'est-à-dire si le pointeur d'écriture rejoint le pointeur de lecture, le contrôleur de mémoire 390 lance immédiatement la lecture du contenu numérique, c'est-à-dire que le contrôleur 390 lit le contenu numérique et le transmet au terminal hôte 360 où il est déchiffré par l'application 385 et retransmis sur un écran de visualisation (non représenté).

De cette manière, on évite d'écraser un contenu numérique préalablement reçu et non retransmis par un nouveau contenu numérique diffusé reçu. De plus, on évite d'arrêter la mise en mémoire du contenu numérique diffusé en cours de réception. Dans ce mode de réalisation, le contrôleur 390 est contrôlé par l'application 285.

Le contrôleur 390 est apte à autoriser la retransmission différée après la présentation d'un code d'authentification transmis à l'entité par le terminal hôte, ce mode étant par exemple mémorisé dans la mémoire 280. La vérification de l'authentification est par exemple réalisée par la carte à puce 220.

Le contrôleur 390 reçoit les données lues dans la mémoire 395 et contrôle les pointeurs de lecture et d'écriture.

Selon un mode de réalisation particulier, la mémoire 395 est une partie de la mémoire 240 de l'entité électronique 200, cette partie pouvant être sécurisée. Dans ce mode de réalisation, les fonctions du contrôleur 390 sont remplies par exemple par le contrôleur 230.

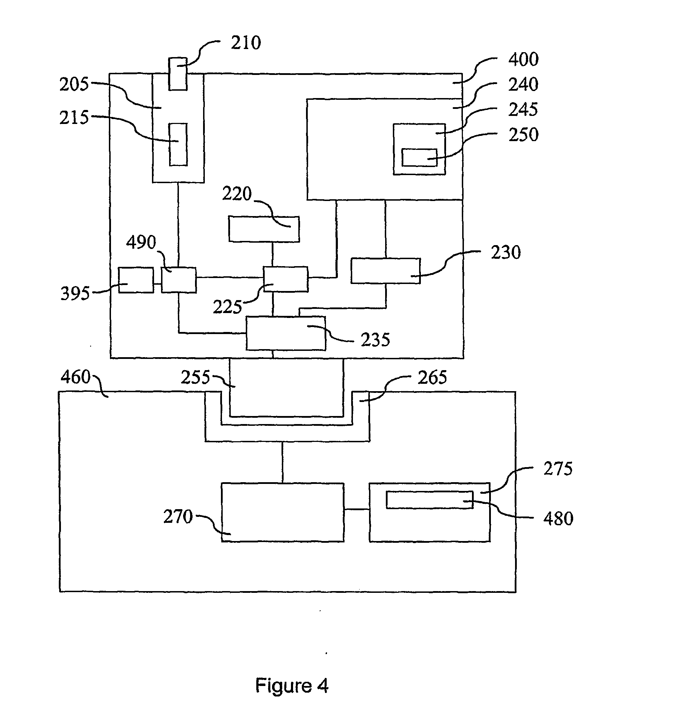

Dans le mode de réalisation illustré en figure 4, la mémorisation du contenu numérique à retransmettre de manière différée est effectuée dans une entité électronique portable sécurisée amovible 400 et la retransmission du contenu mémorisé est effectuée en mettant en oeuvre des moyens ne se trouvant que sur cette entité 400. On observe, en figure 4, que l'entité 400 est similaire à l'entité 200 et comporte tous les éléments de l'entité 200, auxquels s'ajoutent un contrôleur de mémoire 490 et la mémoire 395, préférentiellement non volatile. Le terminal hôte 460 est similaire au terminal 260 et comporte tous les éléments du terminal 260 à l'exception des zones de mémoire 280 et 285 qui sont remplacées par une zone de mémoire 480.

Le contenu numérique reçu par l'entité 400 est déchiffré, la clé étant fournie par la carte puce 220, et mis en mémoire dans la mémoire 395, par le contrôleur de mémoire 490, lorsqu'il doit être retransmis de manière différée. On observe que, lorsque la mémoire 395 est non volatile, le contenu numérique peut être retransmis sur un autre terminal hôte similaire au terminal hôte 460.

La mémoire 395 est préférentiellement gérée de manière cyclique.

Le contrôleur de mémoire 490 effectue la gestion de deux pointeurs, éventuellement sous la commande de l'interface homme-machine 250. Le pointeur d'écriture définit la position, dans la mémoire 395, où doit être écrit le contenu numérique diffusé qui va être reçu. Le pointeur de lecture définit la position, dans la mémoire 395, où doit être lu le contenu numérique à retransmettre de manière différée.

Comme exposé en regard de la figure 6, préférentiellement, si la mémoire 395 est pleine, c'est-à-dire si le pointeur d'écriture rejoint le pointeur de lecture, le contrôleur de mémoire 490 lance immédiatement la lecture du contenu numérique, c'est-à-dire que le contrôleur 490 lit le contenu numérique, le déchiffre et le transmet au terminal hôte 360 où il est retransmis sur un écran de visualisation (non représenté).

De cette manière, on évite d'écraser un contenu numérique préalablement reçu et non retransmis par un contenu numérique diffusé en cours de réception. De plus, on évite d'arrêter la mise en mémoire du contenu numérique diffusé en cours de réception.

Dans ce mode de réalisation, la carte à puce 220 commande le contrôleur de mémoire 490, et notamment le pointeur de lecture.

Selon un mode de réalisation particulier, la mémoire 395 est une partie de la mémoire 240 de l'entité électronique 200, cette partie pouvant être sécurisée. Dans ce mode de réalisation, les fonctions du contrôleur 490 sont remplies par exemple par le contrôleur 230.

Selon une variante de réalisation, l'entité 400 comporte sur sa surface extérieure des boutons permettant de commander la retransmission différée, notamment lecture, pause, retour rapide, avance rapide et enregistrement.

En outre, l'application de retransmission est mémorisée dans la mémoire 480 du terminal hôte 460.

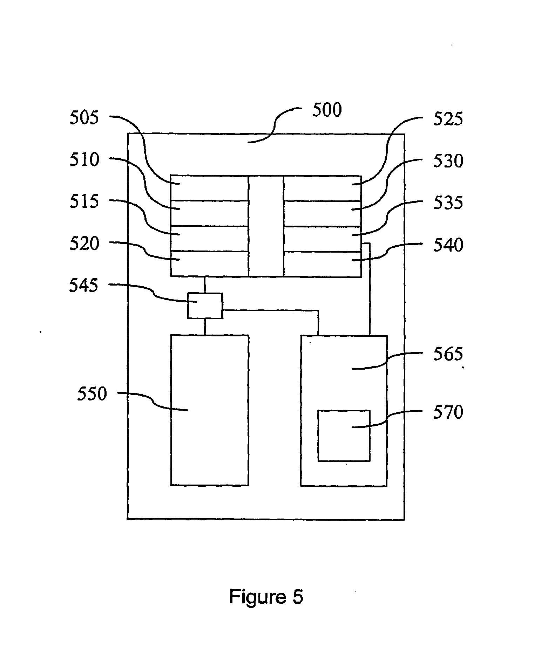

On observe, en figure 5, un mode de réalisation particulier de l'entité électronique portable sécurisée amovible objet de la présente invention, qui pend la forme d'une carte dite SIM ou USIM (*acronyme de Universal Subscriber Identity Module*) 500 comportant également une interface MMC. Cette carte comporte un contact d'alimentation commun 505, un contact de remise à zéro 510, un contact d'horloge SIM 515, une contact de communication de données MMC 520, un contact de masse commune 525, un contact d'horloge MMC 530, un contact d'entrée/sortie de données SIM 535, un contact de commande MMC 540, un contrôleur 545, une mémoire apte à mémoriser le contenu numérique diffusé reçu 550, un microcontrôleur 565 comportant une mémoire EEPROM conservant et mettant en oeuvre une application sécurisée de retransmission différée 570, par exemple similaire à l'application 245. Cette application est également apte à réaliser les fonctions de chiffrement, de déchiffrement, et de gestion d'interface homme-machine, fonctions décrites par ailleurs. Cette mémoire mémorise un menu que le téléphone peut mettre en oeuvre par décision de l'utilisateur.

Le microcontrôleur 565 est apte à contrôler l'accès à la mémoire 550 via le contrôleur 545. Dans un mode de fonctionnement de l'entité électronique 500, lors de la réception, par un téléphone (non représenté) comportant l'entité 500, d'un contenu numérique diffusé à retransmettre de façon différée, le contact de commande de données MMC 520 réceptionne le contenu afin de le mémoriser dans la mémoire 550. Pour ce faire, le téléphone émet une commande, sous la forme d'un APDU (acronyme de Application Protocol Data Unit) via le contact d'entrée/sortie de données SIM 535 afin de commander l'écriture en mémoire 550.

La retransmission des données mémorisées en différé est commandée par le téléphone ou par l'application sécurisée de retransmission différée 570. Pour ce faire, les données mémorisées sont lues par le contrôleur 545 (sur réception de commandes par le contact de commandes MMC 540) sous le contrôle du microcontrôleur 565 afin, d'une part, de ne restituer ces données qu'aux utilisateurs légitimes et, d'autre part, de déchiffrer les données si nécessaire.

En outre, il est possible de limiter la vitesse de retransmission, ainsi que le nombre ou la fréquence de retransmission.

Il est maintenant décrit, en référence à la figure 6, un mode particulier de mise en oeuvre du système constitué de l'entité électronique portable sécurisée amovible et du terminal hôte.

La figure 6 est un algorithme illustrant une application de l'invention à une combinaison d'un moyen de visualisation et d'un téléphone.

Lors d'un appel téléphonique (étape 605) entrant ou sortant, alors que l'utilisateur est en cours d'audition ou de visualisation du contenu numérique diffusé reçu, le contenu numérique diffusé est mémorisé afin d'être ultérieurement retransmis. Pour ce faire, à l'étape 610, on déclenche le mode de retransmission en différé.

Ainsi, à l'étape 615, le contenu numérique diffusé est reçu et mémorisé.

Le contenu reçu peut également être chiffré lors de sa mémorisation (étape 620).

Si l'on détecte (étape 625) la fin de l'appel téléphonique, ou le fait que la mémoire est pleine, alors, la retransmission du contenu mémorisé est activée.

Ainsi, la retransmission est effectuée (étape 635) alors que la réception se poursuit, le contenu diffusé reçu étant mémorisé en vue de sa retransmission ultérieure.

Ces opérations sont effectuées en parallèle, notamment si le dispositif possède plusieurs processeurs, ou en quasi-parallèle si le dispositif ne possède qu'un seul processeur.

Lors de la retransmission, le contenu mémorisé peut-être déchiffré si celui-ci a préalablement été chiffré, notamment lors de l'étape 620.

En outre, lors de la retransmission, on contrôle que la retransmission peut avoir lieu de façon à interdire une reproduction du contenu numérique reçu.

## Revendications

1. - Entité électronique portable sécurisée amovible comportant:
- des moyens de réception d'un contenu numérique diffusé,
- des moyens d'émission dudit contenu numérique diffusé reçu, et
- des moyens de retransmission différée du contenu numérique reçu adaptés à provoquer l'émission, par les moyens d'émission, de manière différée dans le temps, du contenu numérique reçu, **caractérisée en ce que**:
- lesdits moyens de retransmission différée du contenu numérique reçu sont sécurisés de manière à interdire une reproduction du contenu numérique avant l'émission du contenu numérique reçu,
- lesdits moyens étant aptes à fonctionner en parallèle ou quasi-parallèle.

2. - Entité électronique selon la revendication 1, **caractérisée en ce que** l'entité électronique comporte des moyens de mémorisation dudit contenu numérique reçu.

3. -Entité électronique selon l'une quelconque des revendications précédentes, **caractérisée en ce que** les moyens sécurisés de retransmission différée comportent des moyens d'authentification d'un utilisateur.

4. - Entité électronique selon l'une quelconque des revendications précédentes, **caractérisée en ce que** les moyens sécurisés de retransmission différée comportent des moyens pour limiter la vitesse d'émission dudit contenu par les moyens d'émission ou le nombre de retransmissions ou la fréquence de retransmission.

5. - Entité électronique selon l'une quelconque des revendications précédentes, **caractérisée en ce que** les moyens sécurisés de retransmission différée comportent des moyens de chiffrement adaptés à chiffrer le contenu numérique reçu et des moyens de déchiffrement du contenu numérique chiffré et **en ce qu'**elle comporte, en outre, des moyens de mémorisation d'informations de chiffrement et/ou de déchiffrement.

6. - Entité électronique selon l'une quelconque des revendications précédentes, **caractérisée en ce qu'**elle comporte des moyens de mémorisation d'au moins une partie d'une application de retransmission différée (245) dans une zone mémoire de l'entité électronique portable sécurisée

7. - Entité électronique selon la revendication 6, **caractérisée en ce que** l'accès à ladite mémoire de l'entité électronique portable sécurisée est sécurisé par des moyens de sécurisation.

8. - Entité électronique selon la revendication 6 ou 7, **caractérisée en ce que** ladite application comporte des moyens pour former une interface homme/machine apte à commander ladite application et **en ce que** l'interface homme/machine est gérée par des moyens appartenant à une station hôte.

9. - Entité électronique selon l'une quelconque des revendications 6 à 8, **caractérisée en ce que** l'application de retransmission différée met en oeuvre une zone de mémorisation réservée audit contenu, de taille prédéterminée.

10. - Entité électronique selon la revendication 9, **caractérisée en ce que** l'application de retransmission différée comporte des moyens pour configurer la taille de ladite zone de mémorisation dudit contenu.

11. - Entité électronique selon l'une quelconque des revendications 9 ou 10, **caractérisée en ce que** l'application de retransmission différée est adaptée, lorsque ladite mémoire de mémorisation dudit contenu de taille prédéterminée est pleine, à commander la retransmission du contenu à partir de début de la mémoire tampon.

12. - Entité électronique selon l'une quelconque des revendications 6 à 11, **caractérisée en ce que** l'application de retransmission différée met en oeuvre un pointeur de lecture et un pointeur d'écriture dans une mémoire cyclique adaptée à conserver le contenu numérique reçu.

13. - Entité électronique selon l'une quelconque des revendications 6 ou 12, **caractérisée en ce que** ladite application est adaptée à être exécutée en coopération avec une station hôte connectée à ladite entité électronique portable sécurisée amovible après chargement d'au moins une partie de l'application dans la mémoire de cette station hôte et **en ce que** l'application de retransmission différée (245) est à lancement automatique, après la connexion de l'entité électronique (200) au terminal hôte (260).

14. - Entité électronique selon l'une quelconque des revendications 6 à 13, **caractérisée en ce que** l'application de retransmission différée (245) est apte à décoder le contenu numérique reçu.

15. - Entité électronique selon l'une quelconque des revendications précédentes, **caractérisée en ce qu'**elle comporte des moyens de conversion du contenu numérique reçu, lesdits moyens de conversion comportant une interface de réception apte à être reliée à une antenne de réception.

## Claims

1. Removable secure portable electronic entity including:
- means for receiving a broadcast digital content,
- means for sending said received broadcast digital content, and
- means for deferred retransmission of the received digital content adapted to instigate the deferred sending of the received digital content by the sending means, **characterised in that**:
- said means for deferred retransmission of the received digital content are secure so as to prohibit reproduction of the digital content prior to sending the received digital content,
- said means being adapted to operate in parallel mode or in quasi-parallel mode.

2. Electronic entity according to claim 1, **characterised in that** the electronic entity includes means for storing said received digital content.

3. Electronic entity according to either of the preceding claims, **characterised in that** the secure deferred retransmission means include means for authenticating a user.

4. Electronic entity according to any one of the preceding claims, **characterised in that** the secure deferred retransmission means include means for limiting the speed of sending of said content by the sending means or the number of retransmissions or the frequency of retransmission.

5. Electronic entity according to any one of the preceding claims, **characterised in that** the secure deferred retransmission means include encryption means adapted to encrypt the received digital content and means for decrypting the encrypted digital content and **in that** it further includes means for storing encryption and/or decryption information.

6. Electronic entity according to any one of the preceding claims, **characterised in that** it includes means for storing at least part of a deferred retransmission application (245) in a memory area of the secure portable electronic device.

7. Electronic entity according to claim 6, **characterised in that** access to said memory of the secure portable electronic device is made secure by security means.

8. Electronic entity according to claim 6 or 7, **characterised in that** said application includes means for forming a man/machine interface adapted to control said application and **in that** the man/machine interface is managed by means belonging to a host station.

9. Electronic entity according to any one of claims 6 to 8, **characterised in that** the deferred retransmission application uses a memory area reserved for said content and of predetermined size.

10. Electronic entity according to claim 9, **characterised in that** the deferred retransmission application includes means for configuring the size of said memory area for storing said content.

11. Electronic entity according to either of claims 9 or 10, **characterised in that** the deferred retransmission application is adapted, if said memory of predetermined size for storing said content is full, to command the retransmission of the content from the beginning of the buffer.

12. Electronic entity according to any one of claims 6 to 11, **characterised in that** the deferred retransmission application uses a read pointer and a write pointer in a cyclic memory adapted to store the received digital content.

13. Electronic entity according to either of claims 6 or 12, **characterised in that** said application is adapted to be executed in cooperation with a host station connected to said removable secure portable electronic entity after loading at least part of the application into the memory of that host station and **in that** the deferred retransmission application (245) is launched automatically after connection of the electronic entity (200) to the host terminal (260).

14. Electronic entity according to any one of claims 6 to 13, **characterised in that** the deferred retransmission application (245) is adapted to decode the received digital content.

15. Electronic entity according to any one of the preceding claims, **characterised in that** it includes means for converting the received digital content, said conversion means including a receive interface adapted to be connected to a receive antenna.

## Patentansprüche

1. Tragbare, abnehmbare und sichere elektronische Einheit, umfassend:
- Mittel zum Empfangen eines übertragenen digitalen Inhalts,
- Mittel zum Senden des empfangenen übertragenen digitalen Inhalts, und
- Mittel zum verzögerten erneuten Übertragen des empfangenen digitalen Inhalts, die dafür geeignet sind, das zeitverzögerte Senden des empfangenen digitalen Inhalts über die Mittel zum Senden auszulösen, **dadurch gekennzeichnet, dass**:
- die Mittel zum verzögerten erneuten Übertragen des empfangenen digitalen Inhalts sicher sind, sodass sie eine Vervielfältigung des digitalen Inhalts vor dem Senden des empfangenen digitalen Inhalts verhindern,
- die Mittel dafür geeignet sind, parallel oder quasi parallel zu arbeiten.

2. Elektronische Einheit nach Anspruch 1, **dadurch gekennzeichnet, dass** die elektronische Einheit Mittel zum Speichern des empfangenen digitalen Inhalts umfasst.

3. Elektronische Einheit nach einem der vorhergehenden Ansprüche, **dadurch gekennzeichnet, dass** die sicheren Mittel zum verzögerten erneuten Übertragen Mittel zum Authentifizieren eines Benutzers umfassen.

4. Elektronische Einheit nach einem der vorhergehenden Ansprüche, **dadurch gekennzeichnet, dass** die sicheren Mittel zum verzögerten erneuten Übertragen Mittel zum Begrenzen der Geschwindigkeit beim Senden des Inhalts über die Mittel zum Senden oder der Zahl der erneuten Übertragungen oder der Häufigkeit der erneuten Übertragung umfassen.

5. Elektronische Einheit nach einem der vorhergehenden Ansprüche, **dadurch gekennzeichnet, dass** die sicheren Mittel zum verzögerten erneuten Übertragen Mittel zum Verschlüsseln umfassen, die dafür eingerichtet sind, den empfangenen digitalen Inhalt zu verschlüsseln, und Mittel zum Entschlüsseln des verschlüsselten digitalen Inhalts, und **dadurch**, dass sie ferner Mittel zum Speichern von Verschlüsselungs- und/oder Entschlüsselungsinformationen umfasst.

6. Elektronische Einheit nach einem der vorhergehenden Ansprüche, **dadurch gekennzeichnet, dass** sie Mittel zum Speichern von mindestens einem Teil einer Anwendung zum verzögerten erneuten Übertragen (245) in einem Speicherbereich der tragbaren und sicheren elektronischen Einheit umfasst.

7. Elektronische Einheit nach Anspruch 6, **dadurch gekennzeichnet, dass** der Zugriff auf den Speicher der tragbaren und sicheren elektronischen Einheit mit Sicherungsmitteln gesichert ist.

8. Elektronische Einheit nach Anspruch 6 oder 7, **dadurch gekennzeichnet, dass** die Anwendung Mittel zum Erstellen einer Benutzerschnittstelle umfasst, die dafür geeignet ist, die Anwendung zu steuern und **dadurch**, dass die Benutzerschnittstelle von Mitteln, die zu einer Host-Station gehören, verwaltet wird.

9. Elektronische Einheit nach einem der Ansprüche 6 bis 8, **dadurch gekennzeichnet, dass** die Anwendung zum verzögerten erneuten Übertragen einen Speicherbereich mit einer bestimmten Größe verwendet, der für den Inhalt bestimmt ist.

10. Elektronische Einheit nach Anspruch 9, **dadurch gekennzeichnet, dass** die Anwendung zum verzögerten erneuten Übertragen Mittel zum Konfigurieren der Größe des Bereichs zum Speichern des Inhalts umfasst.

11. Elektronische Einheit nach einem der Ansprüche 9 oder 10, **dadurch gekennzeichnet, dass** die Anwendung zum verzögerten erneuten Übertragen dafür eingerichtet ist, wenn der Speicher zum Speichern des Inhalts mit einer bestimmten Größe voll ist, das erneute Übertragen des Inhalts vom Anfang des Pufferspeichers an zu steuern.

12. Elektronische Einheit nach einem der Ansprüche 6 bis 11, **dadurch gekennzeichnet, dass** die Anwendung zum verzögerten erneuten Übertragen einen Lesezeiger und einen Schreibzeiger in einem periodischen Speicher, der dafür eingerichtet ist, den empfangenen digitalen Inhalt aufzubewahren, verwendet.

13. Elektronische Einheit nach einem der Ansprüche 6 oder 12, **dadurch gekennzeichnet, dass** die Anwendung dafür eingerichtet ist, in Zusammenarbeit mit einer Host-Station, die mit der tragbaren, abnehmbaren und sicheren elektronischen Einheit verbunden ist, ausgeführt zu werden, nachdem zumindest ein Teil der Anwendung in den Speicher dieser Host-Station geladen wurde, und **dadurch**, dass die Anwendung zum verzögerten erneuten Übertragen (245) nach dem Verbinden der elektronischen Einheit (200) mit dem Host-Terminal (260) von selbst startet.

14. Elektronische Einheit nach einem der Ansprüche 6 bis 13, **dadurch gekennzeichnet, dass** die Anwendung zum verzögerten erneuten Übertragen (245) dafür geeignet ist, den empfangenen digitalen Inhalt zu dekodieren.

15. Elektronische Einheit nach einem der vorhergehenden Ansprüche, **dadurch gekennzeichnet, dass** sie Mittel zum Umwandeln des empfangenen digitalen Inhalts umfasst, wobei die Mittel zum Umwandeln eine Empfangsschnittstelle umfassen, die dafür geeignet ist, mit einer Empfangsantenne verbunden zu werden.
